# EUROPÄISCHE PATENTANMELDUNG

(11) **EP 1 588 961 A2**
(43) Veröffentlichungstag der Anmeldung: **26.10.2005**
(21) Anmeldenummer: 05006133.2
(22) Anmeldetag: 21.03.2005
(51) Int. Cl.: B65G 47/84

(54) **Übergabevorrichtung**

(30) Priorität: 22.04.2004 DE 202004006383 U; 28.04.2004 DE 202004006716 U
(71) Anmelder: Seidenader Maschinenbau GmbH, 85570 Markt Schwaben (DE)
(72) Erfinder: H. Baumgartner, 83313 Siegsdorf/Oberbayern (DE)
(74) Vertreter: Laufhütte, Dieter

(57) **Zusammenfassung**

Die Erfindung betrifft eine Übergabevorrichtung zur Übergabe von Gegenständen von einer Zuführeinrichtung, an eine Abnahmeeinrichtung mit mindestens zwei übereinander angeordneten Übergabesternen, die zwischen Zuführeinrichtung und Abnahmeeinrichtung angeordnet sind und um eine gemeinsame Achse drehbar gelagert sind. Die Übergabesterne weisen an ihrem Umfang Übergabeaufnahmen für die zu übergebenden Gegenstände auf. Das Antriebssystem der Übergabesterne ist derart ausgestaltet, dass die Übergabesterne mit unterschiedlicher und nicht konstanter Geschwindigkeit antreibbar sind.

## Beschreibung

Die Erfindung betrifft eine Übergabevorrichtung zur Übergabe von Gegenständen von einer Zuführeinrichtung zu einer Abnahmeeinrichtung, insbesondere von einem Zuführstern an einen Abnahmestern.

Speziell bei der Prüfung und Befüllung etc. von Spritzen, Ampullen oder Fläschchen in automatisierten Förderanlagen werden drehbare Kränze bzw. Scheiben eingesetzt, die an ihrem Umfang eine Vielzahl von Aufnahmen für die Gegenstände, z. B. die Ampullen oder Fläschchen, aufweisen. Die Aufnahmen sind z. B. durch eine entsprechende Mechanik derart ausgestaltet, die Gegenstände zu halten und bei der Rotation des Kranzes bzw. der Scheibe mitzunehmen. Solche Kränze bzw. Scheiben werden als Sterne bezeichnet.

In automatisierten Vorgängen werden dabei häufig die Gegenstände von einem Stern zu einem anderen Stern übergeben. Zum Beispiel werden die Gegenstände von einem Einlaufstern einem Inspektionsstern übergeben. Während die Gegenstände von dem Inspektionsstern bewegt werden, werden sie unterschiedlichen Inspektionsvorgängen unterzogen. Zum Beispiel werden Ampullen auf korrekte Befüllung, korrekten Verschluß oder Beschädigungen überprüft. Dazu werden optische oder andere Prüfvorrichtungen eingesetzt.

Andererseits werden nach der Überprüfung die Gegenstände von dem Inspektionsstern z. B. durch einen Auslaufstern wieder abgenommen und ggf. weiteren Verfahrensschritten zugeführt.

Zum Beispiel auf einem Inspektionsstern ist es notwendig, daß die einzelnen Gegenstände einen ausreichenden Abstand voneinander haben, so daß eine individuelle Inspektion der einzelnen Gegenstände trotz der räumlichen Ausdehnung der Prüfvorrichtungen möglich ist. Daher muß bei bekannten Vorrichtungen der Abstand der einzelnen Aufnahmen im Einlauf- bzw. Auslaufstern den Abständen der Aufnahmen des Inspektionssternes entsprechen. Dadurch entsteht die Notwendigkeit eines an sich ungünstig großen Abstandes der Aufnahmen des Einlaufsternes bzw. des Auslaufsternes, der dazu führt, daß bei höherer Geschwindigkeit (z. B. bei mehr als 300 Übergaben pro Minute) die Maschine unruhig läuft und laut wird. Der Abstand der einzelnen Gegenstände an einem Stern wird im folgenden auch als Teilung bezeichnet.

Aufgabe der vorliegenden Erfindung ist es, eine Übergabevorrichtung anzugeben, die es ermöglicht, Gegenstände von einer Zuführeinrichtung zu einer Abnahmeeinrichtung zu übergeben, auch wenn diese die Gegenstände in unterschiedlichen Abständen transportieren, so daß es möglich ist, immer mit einer optimierten Teilung fahren zu können.

Diese Aufgabe wird mit einer Übergabevorrichtung mit den Merkmalen des Anspruches 1 gelöst. Unteransprüche sind auf vorteilhafte Ausführungsformen gerichtet.

Insbesondere eine Ausführungsform gemäß Anspruch 5 ermöglicht es, bei der Zuführung zu und/oder bei der Abnahme von einem Stern mit einer optimierten Teilung fahren zu können und dabei ein ruhiges Laufverhalten mit geringer Lärmerzeugung zu ermöglichen. Zunächst werden die Merkmale und Vorteile einer solchen erfindungsgemäßen Übergabevorrichtung beschrieben.

Eine solche Ausführungsform einer erfindungsgemäßen Übergabevorrichtung dient zur Übergabe von Gegenständen, insbesondere von Ampullen, Spritzen oder Fläschchen, von einem Zuführstern an einen Abnahmestern. Dabei kann es sich z. B. bei dem Abnahmestern um einen Inspektionsstern handeln, bei dem der Abstand der zu transportierenden Gegenstände ein gewisses Mindestmaß haben muß, um eine Inspektion zu ermöglichen. Diese erfindungsgemäße Übergabevorrichtung wird dabei eingesetzt, um Gegenstände von einem Einlaufstern mit z. B. einem kleineren Abstand der Gegenstände an den Inspektionsstern zu übergeben. Diese erfindungsgemäße Übergabevorrichtung kann andererseits auch eingesetzt werden, um z. B. von einem Inspektionsstern mit einem größeren Abstand zwischen den Gegenständen an einen Auslaufstern zu übergeben, der z. B. wiederum einen kleineren Abstand zwischen den Gegenständen aufweist. Insofern dient eine solche erfindungsgemäße Übergabevorrichtung zur Übergabe von Gegenständen von einem Stern zu einem zweiten Stern, deren Abstände zwischen den die Gegenstände aufnehmenden Aufnahmen unterschiedlich ist.

Diese erfindungsgemäße Ausführungsform weist mindestens zwei übereinander angeordnete Übergabesterne auf, die um eine gemeinsame zu den Rotationsachsen des Zuführsternes bzw. Abnahmesternes parallele Übergabesternachse drehbar gelagert sind. Die Übergabesterne weisen jeweils an ihrem Umfang Übergabeaufnahmen für die zu übergebenden Gegenstände auf. Sie sind bezüglich des Zuführsternes und des Abnahmesternes derart angeordnet und ausgestaltet, daß sie die zu übergebenden Gegenstände von den Aufnahmen des Zuführsternes aufnehmen und durch Rotation um die Übergabesternachse dem Abnahmestern zuführen und in dessen Aufnahmen übergeben können. Schließlich weist die erfindungsgemäße Übergabevorrichtung ein Antriebssystem für die Übergabesterne auf, das derart ausgestaltet ist, daß die Übergabesterne mit unterschiedlicher und nicht konstanter Geschwindigkeit antreibbar sind.

Mit der erfindungsgemäßen Übergabevorrichtung ist es möglich, die Übergabesterne derart anzutreiben, daß zwei Aufnahmen unterschiedlicher Übergabesterne am Punkt der Übernahme von dem Zuführstern bzw. am Punkt der Übergabe an den Abnahmestern in einen umfangsmäßigen Abstand gebracht werden, der dem umfangsmäßigen Abstand des Zuführsternes bzw. des Abnahmesternes entspricht. Es läßt sich jeder beliebige umfangsmäßige Abstand zweier zu übergebender Gegenstände einstellen.

Diese erfindungsgemäße Übergabevorrichtung kann im Produktionsablauf überall dort eingesetzt werden, wo Gegenstände von einem ersten Stern an einen zweiten Stern übergeben werden sollen, deren umfangsmäßige Abstände der Aufnahmen für die Gegenstände unterschiedlich sind. Besonders geeignet ist diese erfindungsgemäße Übergabevorrichtung zur Übergabe von einem Einlaufstern an einen Inspektionsstern bzw. zur Übergabe von einem Inspektionsstern an einen Auslaufstern. In diesen Anwendungen ist es mit einer solchen erfindungsgemäßen Übergabevorrichtung möglich, trotz des notwendigen größeren Mindestabstandes der einzelnen Gegenstände am Inspektionsstern bei der Zuführung bzw. bei der Abnahme kleinere Abstände zwischen den Gegenständen zu realisieren.

Die obige Beschreibung bezieht sich auf eine Übergabevorrichtung zur Übergabe von Gegenständen von einem um eine erste Achse drehbaren Zuführstern an einen um eine zweite Achse drehbaren Abnahmestern.

Die Erfindung ist jedoch nicht darauf beschränkt, daß die Gegenstände von Sternen zugeführt bzw. abgeführt werden. Die Erfindung ist überall dort einsetzbar, wo Gegenstände in einem definierten Abstand zugeführt werden und in einem anderen von diesem Abstand unterschiedlichen zweiten Abstand abgeführt werden. Analog können die Gegenstände anstelle von Sternen auch von Zellenbändern oder von Zuführ-/Abnahmeeinrichtungen transportiert werden, die die Gegenstände nicht in Aufnahmen transportieren. Die erfindungsgemäße Übergabevorrichtung mit den erfindungsgemäß ausgestalteten bzw. angeordneten Übergabesternen ermöglicht dabei eine sichere und ruhige Übergabe von der Zuführeinrichtung zur Abnahmeeinrichtung, auch wenn die Gegenstände von der Zuführeinrichtung und der Abnahmeeinrichtung mit unterschiedlichen Abständen transportiert werden.

Jeder der Übergabesterne kann mehrere Aufnahmen an seinem Umfang aufweisen. Besonders einfach zu handhaben und zu steuern ist eine Übergabevorrichtung, bei der die einzelnen Übergabesterne jeweils drei vorzugsweise im 120°-Winkel zueinander angeordnete Übergabeaufnahmen aufweisen.

Besonders vorteilhaft ist es, wenn die Übergabesterne ringförmige Scheiben, im folgenden auch als Sternscheiben bezeichnet, umfassen. Im Inneren der Sternscheiben ist dann z. B. Raum und Möglichkeit für die Unterbringung bzw. den Eingriff von Antriebsvorrichtungen für die einzelnen Sternscheiben.

Das Antriebssystem der erfindungsgemäßen Übergabevorrichtung kann z. B. über entsprechend gesteuerte Getriebe die unterschiedliche und nicht konstante Geschwindigkeit der einzelnen Übergabesterne ermöglichen. Bei einer besonders einfachen Ausgestaltung wird jeder Übergabestern von einem eigenen Antrieb angetrieben. Auf diese Weise ist ohne zusätzlichen mechanischen Aufwand auf einfache Weise die unterschiedliche und nicht konstante Geschwindigkeit der einzelnen Übergabesterne zu realisieren. Dabei ist es insbesondere aus platzökonomischen Gründen von Vorteil, wenn die einzelnen Antriebe von innen an ringförmige Sternscheiben angreifen.

Dies kann z. B. über Reibschluß erfolgen. Besonders sicher und präzise ist es, wenn die Antriebe über Zahnräder mit den Übergabesternen in Wirkverbindung stehen. Bei als ringförmige Sternscheiben ausgestalteten Übergabesternen ist es bevorzugt, wenn die Sternscheiben eine Innenverzahnung aufweisen, in die Zahnräder der Antriebe eingreifen können.

Ebenso können die Sternscheiben über entsprechend angeordnete Außenverzahnungen individuell angetrieben werden.

Bei einer günstigen Ausgestaltung stützen sich die Übergabesterne z. B. über Wälzlager gegeneinander ab und ermöglichen so die Relativdrehung zueinander, ohne daß jeder Übergabestern eine eigene Lagerung benötigt.

Bevorzugterweise weist die erfindungsgemäße Übergabevorrichtung Übergabeaufnahmen auf, die in die Übergabesterne fest integriert sind oder mit diesen fest verbunden sind. Eine solche Ausgestaltung gewährleistet einen sicheren Betrieb.

Bei einer anderen Ausführungsform sind die Übergabeaufnahmen gesondert z. B. in einer entsprechenden Führungsschiene oder Kulissenführung gelagert und werden von Mitnehmerelementen angetrieben, die in beschriebener Weise von übereinander liegenden individuell angetriebenen Elementen, insbesondere Scheiben bewegt werden. Die Führungsschiene bzw. Kulissenführung ist derart ausgestaltet, daß die Übergabeaufnahmen sich um die Übergabesternachse, vorzugsweise auf einer Kreisbahn, bewegen können. Bei einer solchen speziellen Ausführungsform umfaßt ein Übergabestern ein individuelles angetriebenes Element mit einem Mitnehmerelement und eine von diesem Mitnehmerelement bewegte in einer Führung gesondert gelagerte Übergabeaufnahme.

Die erfindungsgemäße Übergabevorrichtung kann für beliebige Gegenstände eingesetzt werden, die von einer Zuführeinrichtung zu einer Abnahmeeinrichtung, insbesondere von einem Zuführstern an einen Abnahmestern, übergeben werden sollen. Besonders vorteilhaft läßt sich die Übergabevorrichtung einsetzen, um Spritzen, Behälter, insbesondere Ampullen oder Flaschen, zu übergeben.

Die Erfindung wird anhand der beiliegenden Figuren im Detail erläutert. Dabei zeigt:
- Figur 1:: einen Schnitt durch eine erfindungsgemäße Ausführungsform der Übergabevorrichtung entlang der Linie B-B, die in dem Insert im rechten unteren Teil der Figur 1 angedeutet ist,
- Figur 2:: eine Schemadarstellung einer erfindungsgemäßen Ausführungsform in Draufsicht, und
- Figur 3:: eine Schemadarstellung zur Verdeutlichung des Funktionsprinzips.

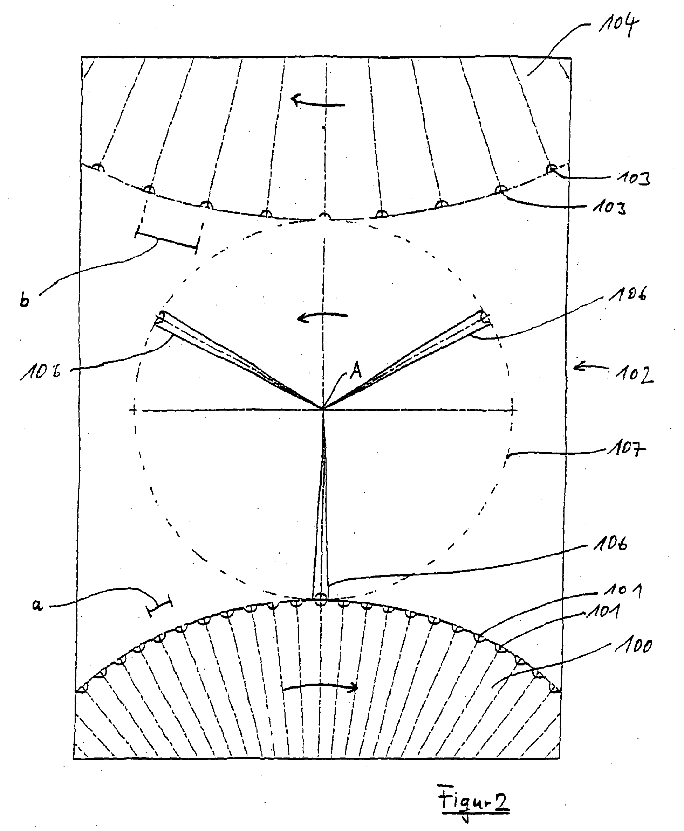

Die Erfindung wird anhand eines Beispieles erläutert, bei dem Ampullen von einem Einlaufstern 100 an einen Inspektionsstern 104 übergeben werden sollen. Es wird zunächst auf Figur 2 Bezug genommen, Figur 2 zeigt die Vorrichtung ohne Ampullen.

In schematischer Darstellung ist der Inspektionsstern 100 mit mehreren Aufnahmen 101 an seinem Umfang gezeigt. Die einzelnen Aufnahmen 101 haben zueinander einen Abstand am Umfang von a, also eine Teilung der Größe a. Von den Aufnahmen 101 sind nur zwei beispielhaft mit Bezugszeichen versehen worden.

Hier nicht dargestellte Ampullen sollen aus diesen Aufnahmen 101 des Einlaufsterns 100 an einen Inspektionsstern 104 in dessen Aufnahmen 103 übergeben werden, von denen ebenfalls nur zwei beispielhaft mit Bezugszeichen versehen worden sind. Die einzelnen Aufnahmen 103 des Inspektionssternes 104 haben eine größere Teilung b. Diese größere Teilung ermöglicht eine individuelle Inspektion der in den Aufnahmen 103 gehaltenen Ampullen auf dem Inspektionsstern 104 trotz der seitlichen Ausdehnung etwaiger Inspektionsinstrumente. Einlaufstern 100 und Inspektionsstern 104 bewegen sich in der durch Pfeile angedeuteten Drehrichtung. Die Übergabe wird mit einer Übergabevorrichtung 102 bewerkstelligt, deren Funktionsweise weiter unten erläutert werden wird. Die Übergabevorrichtung, die im folgenden auch als Teilungsspringer bezeichnet wird, dreht sich in der angegebenen Pfeilrichtung. Dargestellt sind nur die schematisch angedeuteten Aufnahmen 106 der obersten Scheibe des Teilungsspringers 102. Punktiert angedeutet ist der Umlaufweg 107 der einzelnen Ampullen um die Rotationsachse A.

Figur 2 zeigt eine schematische Draufsicht. Da nur das Prinzip anhand dieser Figur erläutert werden soll, sind die Details der Aufnahmen und Lagerungen nicht gezeigt. Gezeigt ist ein Blick auf die oberste Sternscheibe der Übergabevorrichtung, wobei nur die schematisch angedeuteten Aufnahmen 106 dargestellt sind. Die oberste Sternscheibe befindet sich gerade in einer Position, in der eine Aufnahme 106 eine Ampulle aus einer Aufnahme 101 des Einlaufsternes 100 übernehmen könnte.

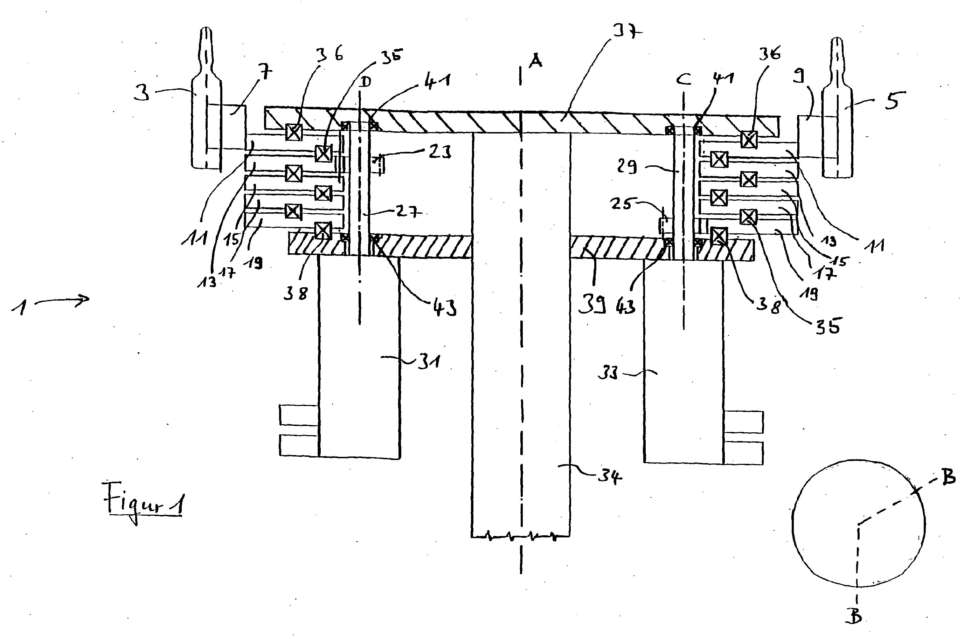

Figur 1 zeigt in seitlichem, geknickten Schnitt einen Teilungsspringer 1. Im Insert im rechten unteren Teil der Figur 1 ist angegeben, wie dieser Schnitt vorgenommen wurde. Im einzelnen zeigt Figur 1 fünf Übergabesterne 11, 13, 15, 17, 19, die sandwichartig übereinander liegen und als ringförmige Sternscheiben ausgestaltet sind. Die Sternscheiben sind um die Rotationsachse A drehbar. Die oberste Sternscheibe 11 ist dazu mit einem Wälzlager 36 gegen die feststehende Deckscheibe 37 drehbar gelagert. Die unterste Sternscheibe 19 ist über ein Wälzlager 38 drehbar gegen die Bodenscheibe 39 gelagert. Die einzelnen Sternscheiben 11, 13, 15, 17, 19 sind über Wälzlager 35 gegeneinander drehbar abgestützt. Bodenscheibe 39 und Deckscheibe 37 sind fest mit der Lagersäule 34 verbunden.

Jede der Sternscheiben 11, 13, 15, 17, 19 hat an ihrem äußeren Umfang Aufnahmen für Ampullen. Bei dieser Ausführungsform weist jede Sternscheibe drei im 120°-Winkel zueinander angeordnete Aufnahmen auf. Nur aufgrund der besonderen Schnittgeometrie der Figur 1, siehe das Insert im rechten unteren Teil zur Darstellung des gewählten Schnittes, sind in der Darstellung der Figur 1 zwei Ampullen 3, 5 mit den dazugehörigen Aufnahmen 7, 9 der obersten Sternscheibe 11 zu sehen. Die Aufnahmen der übrigen Sternscheiben 13, 15, 17, 19 sind in der Schnittdarstellung der Figur 1 nicht sichtbar.

Die Aufnahmen der einzelnen Sternscheiben sind dabei derart ausgestaltet, daß sie alle in gleicher Höhe an zu transportierende Ampullen angreifen können. Insbesondere ragen die nicht sichtbaren Aufnahmen der unteren Sternscheiben 13, 15, 17, 19 entsprechend weit nach oben. Die einzelnen Aufnahmen sind in an sich für solche Transportsterne bekannter Weise derart ausgestaltet, daß sie die Ampullen sicher greifen und transportieren können.

Die Sternscheiben 11, 13, 15, 17, 19 sind ringförmig ausgestaltet. An der Innenseite des jeweiligen Ringes befindet sich eine Innenverzahnung.

Für jede einzelne Sternscheibe ist ein Antrieb vorgesehen. In der Darstellung der Figur 1 sieht man den Antrieb 31 für die Sternscheibe 13 und den Antrieb 33 für die Sternscheibe 19. Exemplarisch für die einzelnen Antriebe der einzelnen Sternscheiben 11, 13, 15, 17, 19 werden hier diese Antriebe für die Sternscheiben 13 bzw. 19 erläutert. Der Antrieb 31, 33 treibt eine Antriebswelle 27, 29 an, die in Lagern 41, 43 in der Deckplatte 37 bzw. der Bodenplatte 39 drehbar gelagert ist. Mit der Antriebswelle 27, 29 dreht sich das Zahnrad 23, 25. Die Außenverzahnung des Zahnrades 23, 25 greift in die Innenverzahnung der Sternscheibe 13, 19 ein. Das Zahnrad 23 wird also durch seinen Antrieb 31 um die Rotationsachse D gedreht, während das Zahnrad 25 durch seinen Antrieb 33 um die Rotationsachse C gedreht wird.

Die Ausführungsform der Figur 1 zeigt eine Übergabevorrichtung mit fünf übereinander liegenden Sternscheiben 11, 13, 15, 17, 19. Die Antriebe für diese fünf Sternscheiben, von denen in der Darstellung der Figur 1 nur die Antriebe 31, 33 für die Sternscheiben 13, 19 sichtbar sind, befinden sich an unterschiedlichen azimuthalen Orten um die Rotationsachse A.

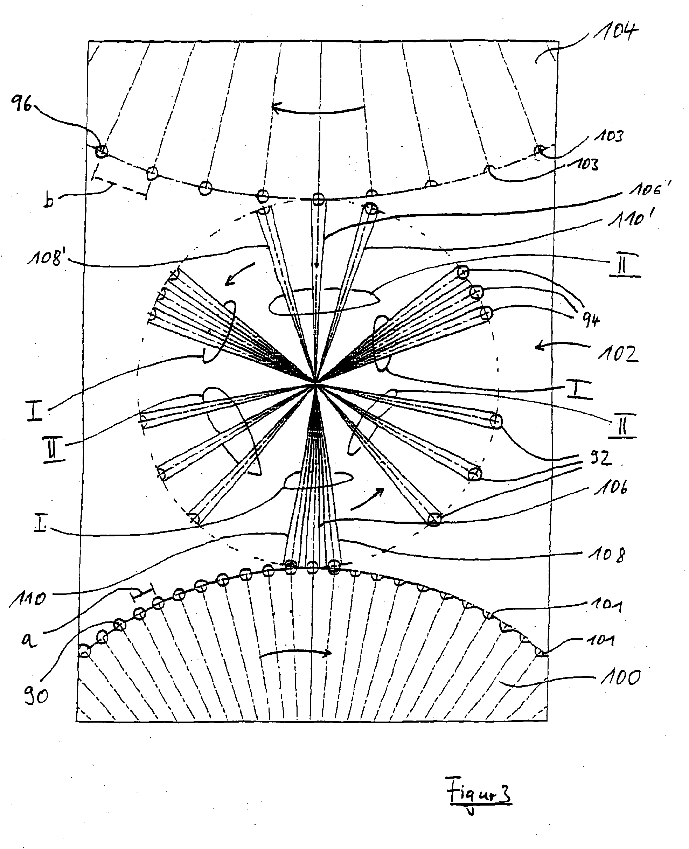

Figur 3 dient der weiteren Erläuterung des Funktionsprinzips einer Übergabevorrichtung 102, hier am Beispiel einer Übergabevorrichtung mit drei übereinander liegenden Sternscheiben. Um das Prinzip erläutern zu können, sind die Aufnahmen 106 der ersten Sternscheibe, die Aufnahmen 108 der zweiten Sternscheibe und 110 der dritten Sternscheibe gleichzeitig dargestellt. Schließlich zeigt Figur 3 die Anordnung zu zwei unterschiedlichen Zeitpunkten. Die durch I zusammengefaßten Darstellungen der Aufnahmen entsprechen einem ersten Zeitpunkt, die mit II zusammengefaßten Aufnahmen stellen die Anordnung zu einem zweiten Zeitpunkt dar.

Wie in Figur 3 im linken unteren Teil erkennbar, sind die Ampullen 90 in den Aufnahmen 101 des Einlaufsternes aufgenommen. Im rechten unteren Teil der Figur 3 erkennt man die leeren Aufnahmen 101 des Einlaufsternes 100 nach Übergabe der Ampullen an die Übergabevorrichtung 102. Zum Zeitpunkt I wird durch die Aufnahme 106 gerade eine Ampulle aus einer Aufnahme 101 des Einlaufsternes 100 übernommen. Die Aufnahme 108 einer anderen Sternscheibe hat bereits eine Ampulle aus der vorherigen Aufnahme 101 des Einlaufsternes 100 übernommen. Die Aufnahme 110 der dritten Sternscheibe steht zur Übernahme einer Ampulle aus einer nachfolgenden Aufnahme 101 des Einlaufsternes 100 bereit. Jeweils im 120°-Winkel zu den beschriebenen Aufnahmen 106, 108, 110 befinden sich zweite und dritte Aufnahmen der einzelnen Sternscheiben. Wie es in Figur 3 erkennbar ist, sind die benachbarten Aufnahmen 106, 108, 110 zum Zeitpunkt I jeweils in kleinem Winkelabstand zueinander, so daß der umfangsmäßige Abstand der einzelnen benachbarten Aufnahmen 106, 108, 110 unterschiedlicher Sternscheiben jeweils dem Teilungsabstand a der Aufnahmen 101 des Einlaufsternes 100 entspricht.

Im rechten Teil der Figur 3 sind die Aufnahmen der Übergabevorrichtung 102 mit Ampullen 92 bzw. 94 gefüllt. Im linken Teil der Figur 3 sind die Aufnahmen der Übergabevorrichtung 102 nach Übergabe der Ampullen an den Inspektionsstern 104 leer.

Die einzelnen Sternscheiben werden individuell angetrieben. Mit Hilfe einer Steuerung ist der Antrieb derart vorgesehen, daß sich nach einer etwa 60°-Drehung der Abstand der einzelnen Aufnahmen der Sternscheiben vergrößert hat. Dieser Zustand ist in Figur 3 durch die mit II zusammengefaßten Aufnahmen dargestellt. Zu diesem Zeitpunkt II sind die Aufnahmen 106', 108' und 110' gerade im Übergabebereich an den Inspektionsstern 104. Die einzelnen Aufnahmen 106', 108', 110' gehören wiederum zu unterschiedlichen übereinanderliegenden Sternscheiben und haben einen umfangsmäßigen Abstand, der dem Teilungsabstand b der Aufnahmen 103 am Inspektionsstern 104 entspricht. Im Zustand II wird gerade eine Ampulle von der Aufnahme 106' an eine Aufnahme 103 des Inspektionssternes 104 übergeben. Die Aufnahme 108' hat ihre Ampulle bereits an eine entsprechende vorauslaufende Aufnahme 103 des Inspektionssternes 104 übergeben. Schließlich steht die Aufnahme 110' der dritten Sternscheibe kurz vor der Übergabe ihrer Ampulle an eine Aufnahme 103 des Inspektionssternes 104. Im linken oberen Teil der Figur 3 erkennt man die in den Aufnahmen 103 des Inspektionssternes 104 aufgenommenen Ampullen 96.

Entlang ihres Weges "pulsieren" also jeweils benachbarte Aufnahmen der drei Sternscheiben zueinander und voneinander weg. Dieser "Pulsierprozeß" wird dabei durch die unabhängigen Antriebe der einzelnen Sternscheiben derart ausgeführt, daß der Abstand der Aufnahmen im Bereich des Einlaufsternes 100 gerade dem Abstand der Aufnahmen 101 des Einlaufsternes 100 und im Bereich des Inspektionssternes 104 gerade dem Abstand b der Aufnahmen 103 des Inspektionssternes entspricht. Auf diese Weise ist gewährleistet, daß auch bei unterschiedlichen Abständen der Aufnahmen - also bei unterschiedlichem Teilungsabstand - der einzelnen Sterne (z. B. des Einlaufsternes 100 und des Inspektionssternes 104) eine reibungslose und flüssige Übergabe erfolgt.

Selbstverständlich läßt sich eine erfindungsgemäße Übergabevorrichtung in analoger Weise bei der Übergabe von einem Inspektionsstern 104 mit großem Teilungsabstand der Aufnahmen 103 an einen Auslaufstern mit kleinerem Teilungsabstand der Aufnahmen einsetzen.

Um die pulsierende Aufeinanderzu- bzw. Voneinanderwegbewegung benachbarter Aufnahmen der drei Sternscheiben zu ermöglichen, werden die einzelnen Sternscheiben von individuellen Antrieben angetrieben. Die einzelnen Antriebe werden über eine Mikroprozessorsteuerung zur notwendigen Erhöhung bzw. Verringerung der Geschwindigkeit zur Einstellung der Abstände der Aufnahmen der Übergabevorrichtung gesteuert.

Das Prinzip der erfindungsgemäßen Übergabevorrichtung wurde anhand der Figuren 2 und 3 an einem Beispiel erläutert, bei dem drei Sternscheiben mit jeweils drei im 120°-Winkel zueinander angeordneten Aufnahmen vorgesehen sind. Selbstverständlich sind auch andere Anordnungen mit einer anderen Anzahl von Sternscheiben möglich. So zeigt Figur 1 z. B. eine Anordnung mit fünf Sternscheiben 11, 13, 15, 17, 19. Analog zur Darstellung der Figur 3 für drei Sternscheiben bewegen sich bei einer Anordnung mit fünf Sternscheiben jeweils fünf benachbarte Aufnahmen der fünf Sternscheiben pulsierend aufeinander zu bzw. voneinander weg, während sie um die Achse A rotieren. Dazu sind fünf unabhängige Antriebe vorgesehen, von denen in Figur 1 gemäß der gewählten Darstellung zwei Antriebe 31, 33 sichtbar sind.

Die beschriebenen Ausführungsformen weisen jeweils je Sternscheibe drei Aufnahmen im 120°-Winkel auf. Je nach Größe der Übergabevorrichtung bzw. der Größe der zu übergebenden Gegenstände kann auch eine andere Anzahl von Aufnahmen je Sternscheibe vorgesehen sein.

Die Erfindung ist auch nicht auf den Einsatz zur Übergabe von einem Zuführstern zu einem Abnahmestern beschränkt. Eine erfindungsgemäße Übergabevorrichtung kann ebenso vorteilhaft zur Übergabe von anders gestalteten Zuführeinrichtungen zu anders gestalteten Abnahmeeinrichtungen dienen, bei denen sich der Abstand der transportierten Gegenstände unterscheidet. Zum Beispiel können Gegenstände von Zellenbändern zugeführt und/oder abgeführt werden.

## Patentansprüche

1. Übergabevorrichtung zur Übergabe von Gegenständen (3, 5, 90, 92, 94, 96) von einer Zuführeinrichtung (100), die die Gegenstände (3, 5) in einem ersten Abstand (a) voneinander zuführt, an eine Abnahmeeinrichtung (104), die die Gegenstände (3, 5, 90, 92, 94, 96) in einem zweiten Abstand (b) voneinander abtransportiert, wobei sich der erste Abstand (a) von dem zweiten Abstand (b) unterscheidet,
mit mindestens zwei übereinander angeordneten Übergabesternen (11, 13, 15, 17, 19), die zwischen Zuführeinrichtung (100) und Abnahmeeinrichtung (104) angeordnet sind und um eine gemeinsame Übergabesternachse (A) drehbar gelagert sind, wobei
die Übergabesterne (11, 13, 15, 17, 19) an ihrem Umfang Übergabeaufnahmen (7, 9) für die zu übergebenden Gegenstände (3, 5, 90, 92, 94, 96) aufweisen,
bezüglich der Zuführeinrichtung (100) und der Abnahmeeinrichtung (104) derart angeordnet und ausgestaltet sind, daß sie zu übergebende Gegenstände (3, 5, 90, 92, 94, 96) von der Zuführeinrichtung (100) aufnehmen und durch Bewegung um die Übergabesternachse (A) der Abnahmeeinrichtung (104) zuführen und an diese übergeben können, und
ein Antriebssystem für die Übergabesterne vorgesehen ist, das derart ausgestaltet ist, daß die Übergabesterne (11, 13, 15, 17, 19) mit unterschiedlicher und nicht konstanter Geschwindigkeit antreibbar sind.

2. Übergabevorrichtung nach Anspruch 1, bei der die Gegenstände (3, 5, 90, 92, 94, 96) von der Zuführeinrichtung in Aufnahmen zugeführt werden und/oder die Gegenstände (3, 5, 90, 92, 94, 96) von der Abnahmeeinrichtung in Aufnahmen abgeführt werden.

3. Übergabevorrichtung nach einem der Ansprüche 1 oder 2, bei der die Zuführeinrichtung und/oder die Abnahmeeinrichtung ein Zellenband umfassen.

4. Übergabevorrichtung nach einem der Ansprüche 1 bis 3, bei der das Antriebssystem ausgestaltet ist, die einzelnen Übergabesterne (11, 13, 15, 17, 19) derart anzutreiben, daß sich ein umfangsmäßiger Abstand von Übergabeaufnahmen von zwei um die Übergabesternachse (A) rotierenden Übergabesternen von dem ersten Abstand (a) der Zuführeinrichtung (100) zu dem zweiten Abstand (b) der Abnahmeeinrichtung (104) verändert.

5. Übergabevorrichtung nach Anspruch 1 zur Übergabe von Gegenständen (3, 5, 90, 92, 94, 96) von einem um eine erste Achse drehbaren Zuführstern (100) mit an seinem Umfang in einem ersten umfangsmäßigen Abstand (a) angeordneten Aufnahmen (101) für die zu übergebenden Gegenstände an einen um eine zweite zur ersten Achse parallele Achse drehbaren Abnahmestern (104) mit an seinem Umfang in einem zweiten umfangsmäßigen Abstand (b) angeordneten Aufnahmen (103) für die abzunehmenden Gegenstände, wobei sich der erste umfangsmäßige Abstand (a) von dem zweiten umfangsmäßigen Abstand (b) unterscheidet,
mit mindestens zwei übereinander angeordneten Übergabesternen (11, 13, 15, 17, 19), die zwischen Zuführstern (100) und Abnahmestern (104) angeordnet sind und um eine gemeinsame, zu den Rotationsachsen des Zuführsternes (100) bzw. Abnahmesternes (104) parallele Übergabesternachse (A) drehbar gelagert sind, wobei
die Übergabesterne (11, 13, 15, 17, 19) an ihrem Umfang Übergabeaufnahmen (7, 9) für die zu übergebenden Gegenstände (3, 5, 90, 92, 94, 96) aufweisen,
bezüglich des Zuführsternes (100) und des Abnahmesternes (104) derart angeordnet und ausgestaltet sind, daß sie zu übergebende Gegenstände (3, 5) von den Aufnahmen (101) des Zuführsternes (100) aufnehmen und durch Rotation um die Übergabesternachse (A) dem Abnahmestern (104) zuführen und in dessen Aufnahmen (103) übergeben können,
und ein Antriebssystem für die Übergabesterne vorgesehen ist, das derart ausgestaltet ist, daß die Übergabesterne (11, 13, 15, 17, 19) mit unterschiedlicher und nicht konstanter Geschwindigkeit antreibbar sind.

6. Übergabevorrichtung nach Anspruch 5, bei der das Antriebssystem ausgestaltet ist, die einzelnen Übergabesterne (11, 13, 15, 17, 19) derart anzutreiben, daß sich ein umfangsmäßiger Abstand von Übergabeaufnahmen von zwei um die Übergabesternachse (A) rotierenden Übergabesternen von dem ersten umfangsmäßigen Abstand (a) der Aufnahmen (101) des Zuführsternes (100) zu dem zweiten umfangsmäßigen Abstand (b) der Aufnahmen (103) des Abnahmesternes (104) verändert.

7. Übergabevorrichtung nach einem der Ansprüche 5 oder 6, bei der entweder der Zuführstern oder der Abnahmestern ein Inspektionsstern (104) ist.

8. Übergabevorrichtung nach einem der Ansprüche 1 bis 7, bei der die Übergabesterne (11, 13, 15, 17, 19) jeweils drei, vorzugsweise im 120°-Winkel zueinander angeordnete Übergabeaufnahmen aufweisen.

9. Übergabevorrichtung nach einem der Ansprüche 1 bis 8, bei der die Übergabesterne (11, 13, 15, 17, 19) ringförmige Scheiben umfassen.

10. Übergabevorrichtung nach einem der Ansprüche 1 bis 9, bei der die einzelnen Übergabesterne (11, 13, 15, 17, 19) durch unabhängige Antriebe (27, 29, 31, 33) antreibbar sind.

11. Übergabevorrichtung nach Anspruch 9 und Anspruch 10, bei der die Antriebe innen an die ringförmigen Übergabesterne (11, 13, 15, 17, 19) angreifen.

12. Übergabevorrichtung nach Anspruch 11, bei der die ringförmigen Übergabesterne (11, 13, 15, 17, 19) eine Innenverzahnung aufweisen.

13. Übergabevorrichtung nach Anspruch 12, bei der die Antriebe jeweils ein Zahnrad (23, 25) aufweisen, wobei jeweils ein Antrieb ein Zahnrad antreibt, das mit der Innenverzahnung eines Übergabesterns kämmt.

14. Übergabevorrichtung nach einem der Ansprüche 10 bis 13 mit einer Steuervorrichtung zur Steuerung der Bewegung der unabhängigen Antriebe.

15. Übergabevorrichtung nach einem der Ansprüche 1 bis 14, bei der die Übergabesterne (11, 13, 15, 17, 19) gegeneinander abstützend gelagert sind, vorzugsweise über Wälzlager (35).

16. Übergabevorrichtung nach einem der Ansprüche 1 bis 15, bei der die einzelnen Übergabesterne (11, 13, 15, 17, 19) jeweils fest integrierte oder fest mit dem Übergabestern verbundene Übergabeaufnahmen (7, 9) umfassen.

17. Übergabevorrichtung nach einem der Ansprüche 1 bis 15, bei der die Übergabesterne jeweils ein individuell angetriebenes, um die Übergabesternachse drehbares Element mit einem Mitnehmerelement umfassen, das mit einer gesondert gelagerten, insbesondere in einer um die Übergabesternachse herumführende Führungsschiene oder Kulissenführung geführten Übergabeaufnahme zu dessen individueller Bewegung zusammenwirkt.

18. Übergabevorrichtung nach einem der Ansprüche 1 bis 17, bei der die Aufnahmen (7, 9) zur Aufnahme von Spritzen oder Behältern, insbesondere Ampullen oder Flaschen, ausgestaltet sind.
